Europäisches Patentamt

European Patent Office

Office européen des brevets

(19)

(11) Veröffentlichungsnummer: **0 182 268**
**B1**

(12) **EUROPÄISCHE PATENTSCHRIFT**

(45) Veröffentlichungstag der Patentschrift: **09.05.90**

(51) Int. Cl.⁵: **F 16 K 47/02**

(21) Anmeldenummer: **85114394.1**

(22) Anmeldetag: **13.11.85**

(54) Geräuscharmes Ventil für Sanitärarmaturen.

(30) Priorität: **22.11.84 DE 3442513**

(43) Veröffentlichungstag der Anmeldung:
**28.05.86 Patentblatt 86/22**

(45) Bekanntmachung des Hinweises auf die
Patenterteilung:
**09.05.90 Patentblatt 90/19**

(84) Benannte Vertragsstaaten:
**AT CH DE FR IT LI SE**

(56) Entgegenhaltungen:
**EP-A-0 059 697**
**DE-A-2 658 024**
**DE-A-2 757 672**
**DE-A-2 937 475**
**DE-A-3 136 227**
**DE-A-3 137 774**
**DE-U-1 998 358**
**FR-A-2 564 172**

(73) Patentinhaber: **FRIEDRICH GROHE
ARMATURENFABRIK GmbH & CO
Hauptstrasse 137
D-5870 Hemer 1 (DE)**

(72) Erfinder: **Jensen, Hans-Jürgen
Grosse Breite 39
D-4777 Welver-Scheidingen (DE)**
Erfinder: **Stiller, Klaus
Ihmerter Strasse 60
D-5990 Altena 8 (DE)**

Courier Press, Leamington Spa, England.

**Beschreibung**

Die Erfindung betrifft ein Ventil, insbesondere Mischventil für Sanitärarmaturen, mit den im Oberbegriff des Anspruchs 1 angegebenen Merkmalen.

Ein derartiges Ventil ist aus der DE-A-27 57 672 bekannt. Zur Minderung des Fließgeräusches ist hierbei vorgeschlagen, insbesondere den Überströmkanal stromabwärts hinter der Einlaßöffnung sprunghaft erweitert auszubilden. Diese Maßnahme reicht jedoch für eine hinreichende Fließgeräuschminderung nicht aus.

Außerdem ist es aus der DE-A-26 58 024 bekannt, zur Fließgeräuschreduzierung in den Begrenzungswänden des Überströmkanals in relativ dichter Folge Erhebungen und/oder Vertiefungen auszubilden. Diese Oberflächenbeschaffenheit der Begrenzungswände reicht aber ebenfalls meist nicht für eine gewünschte Fließgeräuschminderung aus.

Der Erfindung liegt daher die Aufgabe zugrunde, die Einrichtung zur Fließgeräuschreduzierung für ein Ventil der im Oberbegriff des Anspruchs 1 angegebenen Gattung zu verbessern.

Ferner ist es bereits bekannt, im Überströmkanal einen separaten Anströmkörper als geräuschdämpfende Vorrichtung vorzusehen (DE-A-29 37 475). Hierbei sind jedoch besondere Befestigungsvorrichtungen für den Anströmkörper erforderlich. Außerdem ist der Anströmkörper mit Abstand zur Festscheibe angeordnet.

Die vorstehende Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 7 angegeben.

Die mit der Erfindung erzielten Vorteile bestehen insbesondere darin, daß im kritischen Drossel- und Schließbereich das zuströmende Wasser in eine Vielzahl von Einzelströme durch die Einschnitte in der Seitenwand der Steuerscheibe aufgeteilt wird. Hierdurch wird eine unerwartet gute Geräuschminderung erreicht, wobei die Herstellung der Einschnitte, insbesondere bei der einstückigen Ausbildung mit der Steuerscheibe, sehr kostengünstig erfolgen kann. Darüber hinaus wird mit der erfindungsgemäßen Ausbildung erreicht, daß die äußerst unerwünschte Möglichkeit der Wasserschlagbildung durch eine schnelle Griffhebelbetätigung, die ein schnelles Schließen der Durchgangsöffnung in den Ventilscheiben bewirkt, erheblich reduziert wird.

Ausführungsbeispiele der Erfindung sind in der Zeichnung dargestellt und werden im folgenden näher beschrieben.

Es zeigt

Figur 1 ein von einer Steuerscheibe und einer Festscheibe gebildetes Ventilscheibenpaar im Schnitt in der Ebene I der Figur 2;

Figur 2 das Scheibenpaar gemäß Figur 1 in Draufsicht;

Figur 3 eine andere Steuerscheibe im Schnitt;

Figur 4 die Steuerscheibe gemäß Figur 3 in Draufsicht;

Figur 5 eine weitere Steuerscheibe im Schnitt;

Figur 6 eine Druntersicht der Steuerscheibe gemäß Figur 5;

Figur 7 eine weitere Steuerscheibe im Schnitt;

Figur 8 eine Draufsicht der Steuerscheibe gemäß Figur 7;

Figur 9 einen Teilschnitt einer modifizierten Ausführung einer Steuerscheibe gemäß Figur 7.

Der Einfachheit halber sind bei den Ausführungsbeispielen in der Zeichnung gleiche oder entsprechende Elemente mit jeweils gleichen Bezugszeichen versehen.

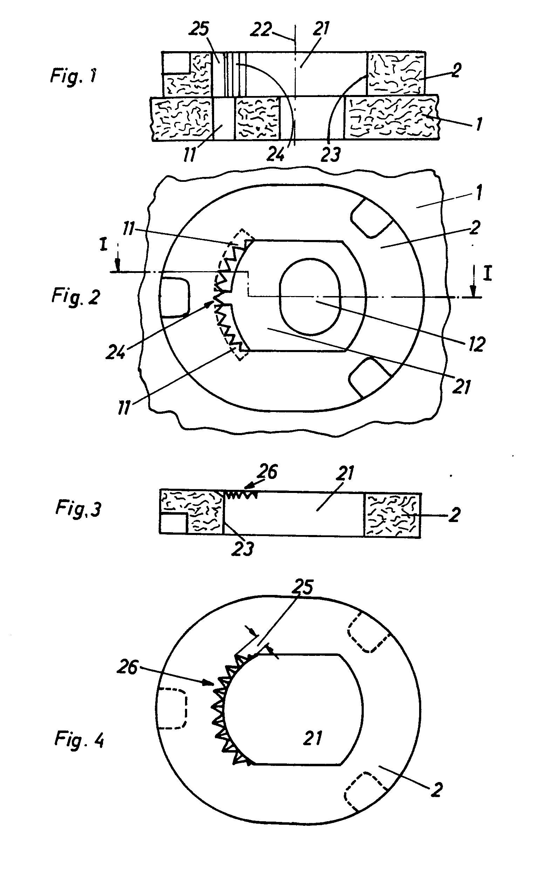

In Figur 1 ist ein Ventilscheibenpaar gezeigt, wie es bei sanitären Wassermischventilen eingesetzt wird. Ein derartiges Ventil ist z.B. in der DE-A-31 37 774 beschrieben. In dem Ventilgehäuse ist hierbei eine Festscheibe 1 fixiert, die mit ihren Zulauföffnungen 11 für Kalt- und Warmwasser sowie ihrer Mischwasserablauföffnung 12 mit den Kanälen in der Armatur verbunden ist. An einer Stirnfläche ist eine Steuerscheibe 2 angelagert, wobei die aneinanderliegenden Stirnflächen feinstbearbeitet sind, so daß bei einem Verschieben der Steuerscheibe 2 zur Festscheibe 1 eine wasserdichte Anlage gewährleistet ist. In der Steuerscheibe 2 ist ein Überströmkanal 21 als Durchbruch ausgebildet. Die von der Festscheibe 1 abgekehrte Stirnseite der Steuerscheibe 2 wird dabei von einem in der Zeichnung nicht dargestellten und formschlüssig mit der Steuerscheibe verbundenen Führungs- und Abdeckglied verschlossen. Der Überströmkanal 21 ist dabei so bemessen, daß eine wahlweise Verbindung der Zulauföffnungen 11 mit der Mischwasserablauföffnung 12 ermöglicht ist. Durch eine Verdrehung der Steuerscheibe 2 um die Mittelachse 22 kann das Mischungsverhältnis des zuströmenden Kalt- und Warmwassers bzw. die Temperatur des ausfließenden Mischwassers eingestellt werden, während durch ein radiales Verschieben der Steuerscheibe 2 auf der Festscheibe 1 die Gesamtdurchflußmenge bestimmt werden kann.

Zur Reduzierung der Fließgeräusche in dem Mischventil ist die den Zulauföffnungen 11 zugeordnete Seitenwand 23 des Überströmkanals 21 mit einer Vielzahl von Einschnitten 24 versehen. Die Einschnitte 24 weisen eine derartige Tiefe 25 auf, daß sie bei voll geöffnetem Ventil etwa die Hälfte des Querschnitts der Zulauföffnungen 11 bedecken.

Wie durch Versuche festgestellt wurde, treten bei herkömmlichen Ventilen die stärksten Fließgeräusche im Öffnungs-bzw. Schließbereich auf, während bei voll geöffnetem Ventil wesentlich geringere Fließgeräusche auftreten. Durch die an der Seitenwand ausgebildeten Einschnitte 24 wird nun gerade in diesem kritischen Bereich das eintretende Wasser in eine Vielzahl von Einzelstrahlen zerlegt, wodurch ein starke Fließgeräuschreduzierung im kritischen Ventilbereich erzielt wird. Die Einschnitte 24 können zweckmäßig bei der Herstellung der als Keramikscheibe ausgebildeten Steuerscheibe 2 mit eingeformt werden.

In den Figuren 3 und 4 ist ein abgewandeltes Ausführungsbeispiel dargestellt. Die Steuerscheibe 2 hat hierbei im Überströmkanal 21 an der stromaufwärtsgelegenen Kante von Seitenwand 23 und Stirnwand eine Vielzahl von Kerben 26.

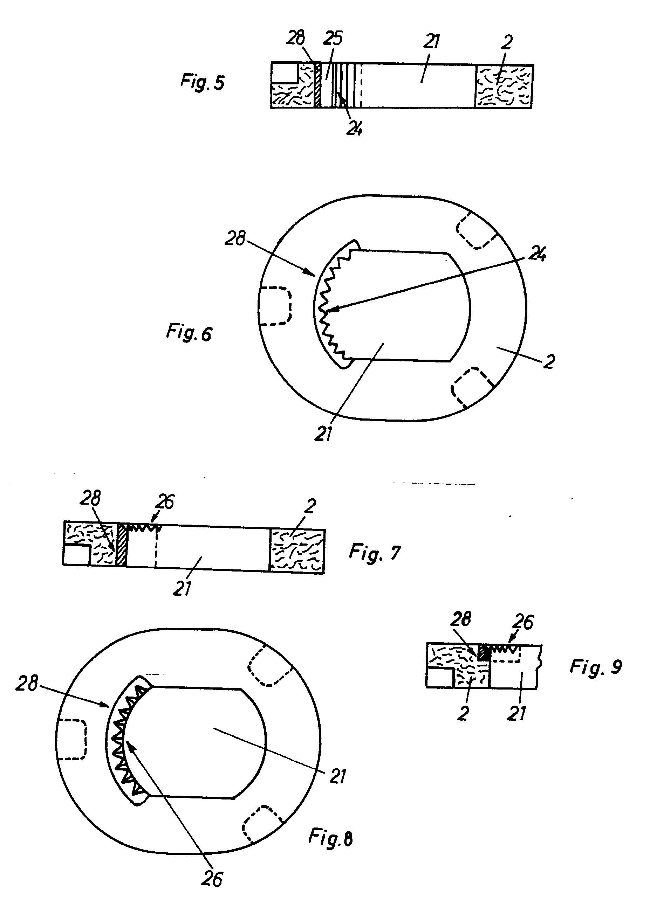

In den Figuren 5 bis 9 sind Ausführungsbeispiele gezeigt, die im Überströmkanal 21 der aus Keramikmaterial hergestellten Steuerscheibe 2 eine Aussparung 28 haben, in die ein Verbundmaterial eingebettet ist, in dem die Einschnitte 24 eingeformt sind. Als Verbundmaterial kann vorzugsweise ein Elastomer oder Metall eingesetzt werden. In den Ausführungsbeispielen der Figuren 5 bis 9 ist als Verbundmaterial Gummi gewählt, das an der Seitenwand 23 der aus Keramikmaterial hergestellten Steuerscheibe 2 aufvulkanisiert ist.

In den Figuren 5 und 6 weist das Verbundmaterial Einschnitte 24 auf, die sich über die gesamte Dicke der Seitenwand erstrecken. In den Figuren 7 und 8 ist dagegen nur die stromaufwärts gelegene Kante mit Kerben 26 versehen. Die Aussparung 28 kann sich dabei sowohl über die gesamte Dicke der Seitenwand 23 (Figur 7) oder über einen Teil der Seitenwand 23 (Figur 9) erstrecken.

Selbstverständlich können die erfindungsgemäßen Maßnahmen auch bei einem Mengenregulierventil mit drehbarer Steuerscheibe wirkungsvoll eingesetzt werden. Hierbei sind im Bereich des Regelquerschnitts die Einschnitte entsprechend anzuordnen. Insbesondere beim Einsatz einer drehbaren Steuerscheibe kann es zweckmäßig sein, wenn neben der Steuerkante des Überströmkanals die Zulauföffnungen der Festscheibe ergänzende Einschnitte haben.

## Patentansprüche

1. Ventil, insbesondere Mischventil für Sanitärarmaturen, mit einer Festscheibe (1), die mindestens eine Wassereinlaßöffnung (11) enthält, mit einer zur Festscheibe (1) beweglich angeordneten Steuerscheibe (2), die mit wenigstens einem als Durchbruch geformten Überströmkanal (21) versehen ist und deren von der Festscheibe (1) abgekehrte Stirnseite von einer Abdeck- und Führungshaube gehaltert ist, und einer im Überströmkanal (21) ausgebildeten Einrichtung zur Fließgeräuschminderung, dadurch gekennzeichnet, daß wenigstens im Überströmkanal (21) der Steuerscheibe (2) eine im Bereich einer oder mehrerer Einlaßöffnungen (11) der Festscheibe (1) gelegene Seitenwand (23) eine Vielzahl von Einschnitten (24, 26) hat, die eine derartige Tiefe (25) aufweisen, daß sie bei voll geöffnetem Ventil etwa die Hälfte des Querschnitts der Einlaßöffnung bzw. Einlaßöffnungen (11) überdecken.

2. Ventil nach Anspruch 1, dadurch gekennzeichnet, daß die Einschnitte (24) als Kerben (26) an der stromaufwärts gelegenen Kante von Seitenwand (23) und Stirnwand ausgebildet sind.

3. Ventil nach Anspruch 1, dadurch gekennzeichnet, daß die Einschnitte (24) sich über die gesamte Dicke der Steuerscheibe (2) erstrecken.

4. Ventil nach Anspruch 1 bis 3, dadurch gekennzeichnet, daß im Bereich der Einschnitte (24) eine Aussparung (28) in der Steuerscheibe (2) vorgesehen ist, in der ein Verbundmaterial eingebracht ist, in dem die Einschnitte (24) angeordnet sind.

5. Ventil nach Anspruch 4, dadurch gekennzeichnet, daß als Verbundmaterial Metall oder ein Elastomer vorgesehen ist.

6. Ventil nach Anspruch 5, dadurch gekennzeichnet, daß Gummi als Verbundmaterial eingesetzt ist, das an der Steuerscheibe (2) anvulkanisiert ist.

7. Ventil nach den Ansprüchen 1 bis 6, dadurch gekennzeichnet, daß auch in den Seitenwänden der Einlaß öffnungen (11) der Festscheibe (1) ergänzende Einschnitte vorgesehen sind.

## Revendications

1. Soupape notament soupape mélangeuse pour robinetterie sanitaire comportant un disque fixe (1) avec au moins un orifice d'entrée d'eau (11), un disque de commande (2) mobile par rapport au disque fixe (1), disque mobile comportant au moins un canal de débordement (21) réalisé sous la forme d'un passage et dont le côté opposé à celui du disque fixe (1) est maintenu par une coiffe de guidage et de recouvrement et une installation réalisée dans le canal de débordement (21) pour réduire le bruit de l'écoulement, caractérisée en ce qu'au moins, dans le canal d'écoulement (21) du disque de commande (2), une paroi latérale (23), située au niveau d'un ou plusieurs orifices d'entrée (11) du disque fixe (1), possède un grand nombre d'encoches (24, 26) qui ont une profondeur (25), telle que lorsque la soupape est ouverte elle recouvre sensiblement la moitié de la section de l'orifice ou des orifices d'entrée (11).

2. Soupape selon la revendication 1, caractérisée en ce que les encoches (24) sont des encoches (26) réalisées dans l'arête de la paroi latérale (23) en amont et dans la paroi frontale.

3. Soupape selon la revendication 1, caractérisée en ce que les encoches (24) s'étendent sur toute l'épaisseur du disque de commande (2).

4. Soupape selon les revendications 1 à 3, caractérisée en ce qu'au niveau des encoches (24), le disque de commande (2) comporte une cavité (28) dans laquelle a été introduit un matériau composite, les encoches (24) étant réalisées dans ce matériau.

5. Soupape selon la revendication 4, caractérisée en ce que le matériau composite est du métal ou un élastomère.

6. Soupape selon la revendication 5, caractérisée en ce que le matériau composite est du caoutchouc vulcanisé sur le disque de commande (2).

7. Soupape selon les revendications 1 à 6, caractérisée en ce que des encoches complémentaires sont prévues dans les parois latérales des orifices d'entrée (11) du disque fixe (1).

**Claims**

1. A valve, in particular a mixer valve for sanitary fittings, with a fixed disc (1), which contains at least one water inlet opening (11), with a control disc (2) arranged to be movable relative to the fixed disc (1), which control disc is provided with at least one flow-over channel (21) formed as a through-opening and the end face of which control disc remote from the fixed disc (1) is held by a covering and guiding dome, and with an arrangement constructed in the flow-over channel (21) to reduce the flow noise, characterized in that at least in the flow-over channel (21) of the control disc (2) a side wall (23) positioned in the region of one or more inlet openings (11) of the fixed disc (1) has a plurality of indentations (24, 26), the depth (25) of which is such that, when the valve is fully open, they cover approximately half of the cross-section of the inlet opening or inlet openings (11).

2. A valve according to claim 1, characterized in that the indentations (24) are constructed as notches (26) on the upstream edge of side wall (23) and end wall.

3. A valve according to claim 1, characterized in that the indentations (24) extend across the entire thickness of the control disc (2).

4. A valve according to claims 1 to 3, characterized in that in the region of the indentations (24) there is provided in the control disc (2) a recess (28) in which a composite material, in which the indentations (24) are arranged, is embedded.

5. A valve according to claim 4, characterized in that metal or an elastomer is provided as the composite material.

6. A valve according to claim 5, characterized in that rubber that has been vulcanized onto the control disc (2) is used as the composite material.

7. A valve according to claims 1 to 6, characterized in that supplementary indentations are also provided in the side walls of the inlet openings (11) of the fixed disc (1).

Fig. 1

25    22    21

2

1

11    24    23

I

11

1

2

Fig. 2

24

12

11

21

Fig. 3

26    21

23

2

25

26

Fig. 4

21

2

1

Fig. 5

Fig. 6

Fig. 7

Fig. 9

Fig. 8